# EUROPEAN PATENT SPECIFICATION

(11) **EP 2 947 737 B1**
(45) Date of publication and mention of the grant of the patent: **02.01.2019**
(21) Application number: 13872220.2
(22) Date of filing: 21.01.2013
(51) Int. Cl.: H02G 5/06, H02B 13/065

(54) **GAS-INSULATED SWITCHGEAR**
GASISOLIERTE SCHALTANLAGE
APPAREILLAGE DE COMMUTATION ISOLÉ PAR UN GAZ

(43) Date of publication of application: 25.11.2015
(73) Proprietor: Mitsubishi Electric Corporation, Tokyo 100-8310 (JP)
(72) Inventor: NAKAUCHI, Shinichiro, Tokyo 100-8310 (JP); SADAKUNI, Hitoshi, Tokyo 100-8310 (JP)
(74) Representative: Zech, Stefan Markus
(86) International application number: PCT/JP2013/051080
(87) International publication number: WO 2014/112123

(56) References cited:
- EP-A1- 2 937 958
- WO-A1-2014/097729
- DE-C1- 10 009 474
- JP-A- H0 279 711
- JP-A- H08 149 667
- JP-A- H08 237 836
- JP-A- 2009 284 651
- JP-A- 2010 207 047
- JP-U- S59 149 422

## Description

### Field

The present invention relates to a gas-insulated switchgear that can suppress movement of metallic foreign matter mixed in a tank.

### Background

In a gas-insulated switchgear, its insulation capability is maintained by filling insulating gas in a space between a metal tank that is set at a ground potential and a central conductor that is arranged in the tank and to which a high voltage is applied.

However, if a minute metallic foreign matter is mixed into the tank, the metallic foreign matter is electrically charged due to an influence of an electric field generated by the central conductor with a high voltage, and move reciprocally in a radial direction in the tank, thereby causing a decrease in a withstand voltage. Therefore, it is required to suppress movement of the metallic foreign matter in the tank.

Conventional gas-insulated switchgears are designed to prevent electric charges having a reverse polarity to that of a central conductor from accumulating in metallic foreign matter by applying an insulating coating material to an inner surface of a tank so as to eliminate transfer of electric charges from the inner surface of the tank to the metallic foreign matter, designed to reduce the occurrence of the fact that an electrical attraction force becomes greater than the weight of the metallic foreign matter itself, to cause the metallic foreign matter to float and to prevent the metallic foreign matter from adhering to a conductor with a high-voltage, thereby causing flashover.

Patent Literature 1 describes a gas-insulated switchgear in which a coating material that contains zinc oxide (ZnO) having non-linear resistance characteristics is applied to the inner surface of a tank.

Patent Literature 2 describes, as a coating technique in a gas-insulated switchgear, a technique of applying non-linear resistance coating to a barrier insulator.

### Citation List

### Patent Literatures

Patent Literature 1: Japanese Patent Application Laid-open No. 2010-207047
Patent Literature 2: Japanese Patent No. 4177628 Summary

### Technical Problem

In the configuration described above, in which an insulating coating material is applied to the inner surface of a tank, it is effective to suppress movement of metallic foreign matter when the voltage is low. However, when the voltage is high, the electrical attraction force becomes greater than the weight of the metallic foreign matter itself so that the metallic foreign matter is caused to float, due to polarization (electric charges having a reverse polarity to that of a central conductor accumulate on the central conductor side) of the metallic foreign matter that is present on a coating film. Further, when the electric field exceeds an ionization limit of insulating gas, electric charges are supplied to and accumulated in the metallic foreign matter due to generation of partial discharge, and the electrical attraction force becomes greater than the weight of the metallic foreign matter itself so that the metallic foreign matter is caused to float. In this manner, in the configuration in which the insulating coating material is applied to the inner surface of the tank, while it is effective to suppress movement of the metallic foreign matter when the voltage is low, when the voltage is high, it becomes difficult to suppress movement of the metallic foreign matter.

On the other hand, as described in Patent Literature 1, in the configuration in which a coating material containing zinc oxide (ZnO) is applied to the inner surface of a tank, the coating material containing zinc oxide (ZnO) has high insulation properties in a low-voltage region, and thus substantially blocks charge transfer from the inner surface of the tank to metallic foreign matter. Therefore, there is the same effect as the above-described case, where the insulating coating material is applied to the inner surface of the tank. In a high-voltage region, the resistance decreases due to non-linear resistance characteristics, to allow charge transfer between the inner surface of the tank and the metallic foreign matter. Therefore, electrification due to polarization of the metallic foreign matter that is present on the coating and partial discharge is suppressed. However, in the high-voltage region, it is difficult to suppress electrification due to charge transfer (electric charges having a reverse polarity to that of the central conductor) from the inner surface of the tank to the metallic foreign matter, and as a result, it becomes difficult to sufficiently suppress movement of the metallic foreign matter.

Furthermore, the coating technique described in Patent Literature 2 is directed to suppress discharge extension so as to reliably confine electric discharge in a gas space on the inner side of a barrier insulator, and therefore it is different from a technique that is directed to suppress movement of metallic foreign matter that is present on the inner surface of a tank.

The present invention has been achieved in view of the above problems, and an object of the present invention is to provide a gas-insulated switchgear that can suppress movement of metallic foreign matter in a wide range from a region having a small electric field to a region having a large electric field, in a configuration in which a coating film is provided on the inner surface of a tank.

DE 100 09 474 C1 describes a multi-layer dielectric for preventing gas discharge between relatively spaced HV electrodes. The first layer is an insulating layer which is covered by a second layer comprising silicon carbide.This multilayer dielectric is applied to a cylindrical gas tank which surrounds a conductor. WO 2014/097729 A1, which is a document pursuant to Art. 54(3) EPC, describes a gas-insulating equipment comprising a coated metal container filled with an insulation gas, and a coated conductor housed inside the metal container to which a voltage is applied. The coating of the metal container is formed by a first insulating coating and a second coating containing an insulating material and a non-linear resistance material.

### Solution to Problem

The solution to the aforementioned problems is provided by a gas-insulated switchgear according to claim 1.

### Advantageous Effects of Invention

According to the present invention, an insulating first coating film is formed on the inner surface of a tank, and a second coating film is further formed by coating a coating material containing a non-linear resistance material on the first coating film. Due to this configuration, charge transfer from an inner surface to metallic foreign matter is blocked by the first coating film regardless of the size of an electric field, whereas when the electric field is large, the second coating film exhibits conductive properties due to non-linear resistance characteristics of the non-linear resistance material. Therefore, electrification resulting from polarization of metallic foreign matter and partial discharge is suppressed by the second coating film, and movement of the metallic foreign matter can be suppressed from a region having a small electric field to a region having a large electric field.

### Brief Description of Drawings

FIG. 1 is a longitudinal sectional view illustrating a configuration of a gas-insulated switchgear according to an embodiment.
FIG. 2 is a longitudinal sectional view illustrating a configuration of a conventional gas-insulated switchgear.
FIG. 3 is a graph illustrating typical current-voltage characteristics of zinc oxide (ZnO).
FIG. 4 is a graph in which varistor characteristics of zinc oxide (ZnO) and those of silicon carbide (SiC) are compared to each other.

### Description of Embodiments

Exemplary embodiments of a gas-insulated switchgear according to the present invention will be explained below in detail with reference to the accompanying drawings. The present invention is not limited to the embodiments.

### Embodiment.

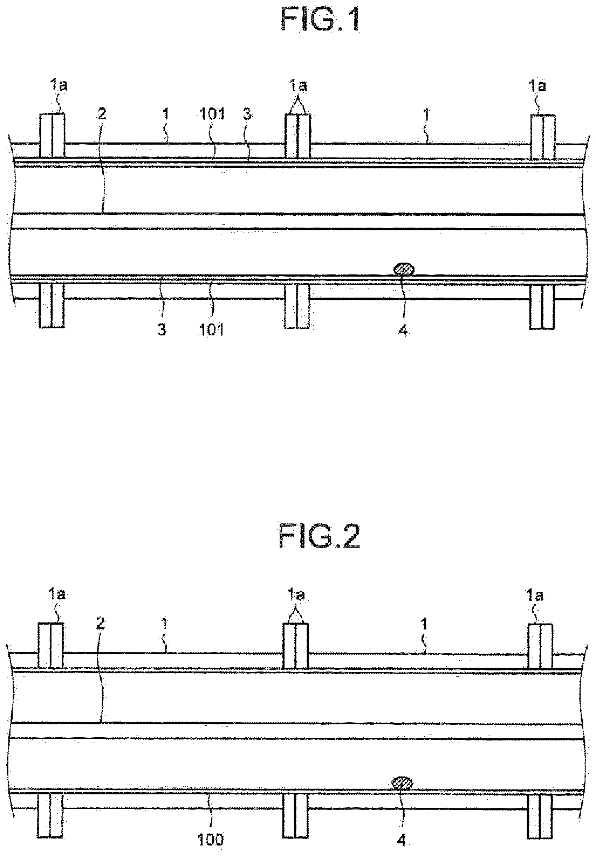

FIG. 1 is a longitudinal sectional view illustrating a configuration of a gas-insulated switchgear according to an embodiment of the present invention. As illustrated in FIG. 1, the gas-insulated switchgear includes a tank 1, a central conductor 2 that is extended in the tank 1, a coating film 101 that is coated on an inner surface of the tank 1, and a coating film 3 that is overcoated on the coating film 101. FIG. 1 illustrates a part of the gas-insulated switchgear, and the gas-insulated switchgear includes, other than these constituent elements, devices such as a breaker, an isolator, and a current transformer for a measuring gauge.

The tank 1 is made of metal and has a substantially cylindrical shape, for example. The tank 1 is extended in an axial direction by coupling a container, the axial end of which is provided with a flange 1a by the flange 1a. The tank 1 is grounded. Insulating gas such as SF₆ is filled in the tank 1.

The central conductor 2 is a conductor to which an alternating voltage is applied, and an alternating current flows therethrough. The central conductor 2 is extended along an axial direction of the tank 1, and is supported by an insulating spacer (not illustrated).

The coating film 101 is formed by coating an insulating coating material, for example, made of resin as a main component.

The coating film is formed of a coating material containing silicon carbide (SiC). For example, the coating film 3 is formed by mixing silicon carbide (SiC) having non-linear resistance characteristics into an insulating coating material, for example, made of resin as a main component, and overcoating the coating material containing silicon carbide (SiC) on the coating film 101. For example, silicon carbide (SiC) powder can be mixed in the coating material. Furthermore, because the coating film 3 is isolated from the grounded tank 1 by the insulating coating film 101, the coating film 3 electrically floats.

It is known that silicon carbide (SiC) exhibits non-linear resistance characteristics without any burning process. That is, silicon carbide (SiC) substantially exhibits insulation properties in a low-voltage or low-current region; however, the resistance decreases in a high-voltage or high-current region. As described later, in silicon carbide (SiC), a transition between an insulating state and a conductive state continuously occurs, as compared to non-linear resistance materials such as zinc oxide (ZnO). Silicon carbide (SiC) is a wide bandgap semiconductor having a larger bandgap than silicon. As the wide bandgap semiconductor, other than silicon carbide (SiC), gallium nitride and diamond can be mentioned, for example.

The filling rate of silicon carbide (SiC) in the coating film 3 is in a range from 30% to 80% in a volume fraction. This filling rate is set because a filling amount that allows silicon carbide (SiC) to come into contact with each other sufficiently in the coating film 3 is required in order that the coating film 3 exhibits non-linear resistance characteristics. A lower limit of the filling amount is defined as a minimum filling amount in which silicon carbide (SiC) can come into contact with each other by percolation. Further, an upper limit of the filling amount is defined as a critical filling amount of the silicon carbide (SiC) powder, and when silicon carbide (SiC) is filled in an amount exceeding the critical filling amount, coating becomes brittle.

In FIG. 1, a minute metallic foreign matter 4 is mixed into the tank 1, and is present on the coating film 3 in the illustrated example.

Operations of the present embodiment are described next. When a voltage applied to the central conductor 2 is low, or when an electric field generated by the central conductor 2 is small, silicon carbide (SiC) in the coating film 3 substantially functions as an insulator. The insulating coating film 101 is also present between the coating film 3 and the inner surface of the tank 1. Therefore, charge transfer from the inner surface of the tank 1 to the metallic foreign matter 4 is blocked, and thus electric charges having a reverse polarity to that of the central conductor 2 are not accumulated in the metallic foreign matter 4. Accordingly, the electrical attraction force due to the electric field generated by the central conductor 2 is prevented from becoming greater than the weight of the metallic foreign matter 4 itself and causing the metallic foreign matter 4 to float.

When a voltage applied to the central conductor 2 is high, or when an electric field generated by the central conductor 2 is large, the resistance of silicon carbide (SiC) in the coating film 3 decreases and the coating film 3 exhibits conductive properties. Meanwhile, the coating film 101 under the coating film 3 has insulation properties regardless of the size of the electric field. Therefore, electrification of the metallic foreign matter 4 due to polarization of the metallic foreign matter 4 that is present on the coating film 3 and partial discharge resulting from ionization of insulating gas is suppressed because the coating film 3 becomes a relief port of electric charges. Meanwhile, electrification due to the transfer of electric charges (electric charges having a reverse polarity to that of the central conductor) from the inner surface of the tank 1 to the metallic foreign matter 4 is blocked by the coating film 101. Therefore, an electrical attraction force due to the electric field generated by the central conductor 4 is prevented from becoming greater than the weight of the metallic foreign matter 4 itself and causing the metallic foreign matter 4 to float.

As described above, according to the present embodiment, the insulating coating film 101 (first coating film) is formed on the inner surface of the tank 1, and the coating film 3 (second coating film) formed by coating a coating material containing an insulating coating material component and a non-linear resistance material (silicon carbide (SiC)) is overcoated on the coating film 101. Accordingly, movement of metallic foreign matter can be suppressed in a wide range from a region having a small electric field to a region having a high electric field.

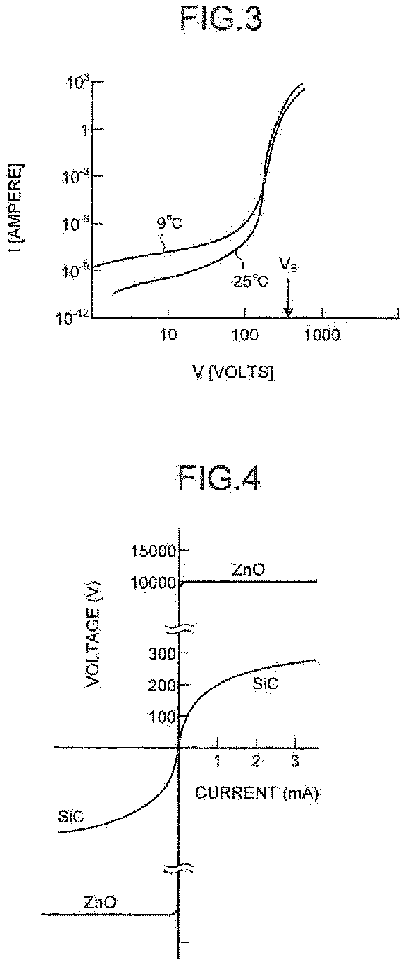

Further effect of the present embodiment is described by comparing the present embodiment with a configuration of a conventional gas-insulated switchgear. FIG. 2 is a longitudinal sectional view illustrating a configuration of a conventional gas-insulated switchgear. In FIG. 2, same reference signs refer to same constituent elements in FIG. 1. FIG. 3 is a graph illustrating typical current-voltage characteristics of zinc oxide (ZnO). FIG. 4 is a graph in which varistor characteristics of zinc oxide (ZnO) and those of silicon carbide (SiC) are compared with each other.

As illustrated in FIG. 2, in a conventional gas-insulated switchgear, a coating film 100 is applied to the inner surface of the tank 1. The coating film 100 is formed of a coating material containing zinc oxide (ZnO) (see Patent Literature 1). In the conventional configuration illustrated in FIG. 2, only one layer of the coating film 100 is applied.

In such a configuration, zinc oxide (ZnO) has high insulation properties in a low-voltage region, so as to block charge transfer from the inner surface of the tank 1 to the metallic foreign matter 4. Meanwhile, in a high-voltage region, the resistance thereof decreases to allow charge transfer between the inner surface of the tank 1 and the metallic foreign matter 4, thereby suppressing electrification due to polarization of the metallic foreign matter 4 that is present on the coating film 100 and partial discharge. However, in the high-voltage region, it is difficult to suppress electrification of the metallic foreign matter 4 due to charge transfer from the inner surface of the tank 1 to the metallic foreign matter 4, and as a result, it becomes difficult to sufficiently suppress movement of the metallic foreign matter 4.

An advantage of using silicon carbide (SiC) as a non-linear resistance material is described next, comparing with a case of using zinc oxide (ZnO). Zinc oxide (ZnO) exhibits non-linear resistance characteristics similarly to silicon carbide (SiC); however, as described below, the degree of non-linearity is considerably different between these materials.

In FIG. 3, a voltage (V) is plotted on a horizontal axis and a current (I) is plotted on a vertical axis, to illustrate varistor characteristics of zinc oxide (ZnO) with regard to different temperatures (9°C, 25°C). Although zinc oxide (ZnO) has a large resistance and exhibits insulation properties in a low voltage, when the voltage exceeds a critical breakdown voltage V_{B}, the resistance value rapidly decreases.

As illustrated in FIG. 4, zinc oxide (ZnO) exhibits a rapid transition between an insulating state and a conductive state, and when the voltage exceeds 10000 (V), zinc oxide (ZnO) exhibits excessive non-linear resistance characteristics such that the resistance rapidly dissipates, whereas silicon carbide (SiC) exhibits a continuous and gradual transition between an insulating state and a conductive state.

Therefore the conventional configuration illustrated in FIG. 2, the film thickness of the coating film 100 needs to be set appropriately so as to achieve the objective of suppressing movement of the metallic foreign matter 4, while taking into consideration an applied voltage in the film thickness direction and the non-linear resistance characteristics of zinc oxide (ZnO). In other words, if there are fluctuations in the film thickness of the coating film 100, a conductive region and an insulating region may be present in a mixed manner on the coating film 100 with regard to the same high electric field, and the suppression effect of electrification resulting from polarization of the metallic foreign matter 4 and partial discharge may decrease.

On the other hand, according to the present embodiment, because the coating film 3 contains silicon carbide (SiC) exhibiting gradual non-linear resistance characteristics as illustrated in FIG. 4, a transition between an insulating state and a conductive state is continuous. Even if there are slight fluctuations in the film thickness of the coating film 3, only the degree of conductivity is slightly different, and the coating film 3 exhibits the similar electrical property as a whole. That is, according to the present embodiment, when silicon carbide (SiC) is used as the non-linear resistance material, fluctuations in the film thickness of the coating film 3 cause less influences on the electrification suppression effect of the metallic foreign matter 4 than the conventional configuration illustrated in FIG. 2. Therefore, fluctuations in the film thickness are within an acceptable degree, and the workability in coating processing of the coating film 3 is improved.

The voltage applied to the central conductor 2 is an alternating voltage, and the voltage continuously changes in time trigonometrically. In the conventional configuration illustrated in FIG. 2, the coating film 100 does not exhibit any conductive property until the size of the alternating electric field exceeds a certain value due to excessive non-linear resistance characteristics of zinc oxide (ZnO), and thus, immediately before exhibiting a conductive property, it is difficult to suppress electrification resulting from polarization of the metallic foreign matter 4 and partial discharge.

Contrary to this, according to the present embodiment, when silicon carbide (SiC) is used as the non-linear resistance material, the conductive property of the coating film 3 continuously changes following the change of the alternating electric field, because of the non-linear resistance characteristics of silicon carbide (SiC). Accordingly, electrification resulting from polarization of the metallic foreign matter 4 and partial discharge can be suppressed according to the size of the electric field.

Furthermore, zinc oxide (ZnO) exhibits non-linear resistance characteristics by calcination. That is, in the conventional configuration illustrated in FIG. 2, it is required to burn the coating film 100 after applying a mixture in which burned zinc oxide (ZnO) powder is mixed in a coating material to the inner surface of the tank 1, or after applying a coating material containing zinc oxide (ZnO) to the inner surface of the tank 1. In any case, in the conventional configuration, a calcination process is required before or after application of coating, thereby increasing the number of manufacturing processes.

On the other hand, silicon carbide (SiC) exhibits non-linear resistance characteristics without performing any calcination. Therefore, when silicon carbide (SiC) is used as the non-linear resistance material, there is no need to burn silicon carbide (SiC), and thus there is an advantage in reduction in the number of manufacturing processes as compared to the conventional configuration illustrated in FIG. 2.

According to the present embodiment, because the coating film 3 is formed on the coating film 101, an existing tank 1 in which an insulating coating material is applied to the inner surface of the tank 1 can be used.

When applying coating to a coating film 3, a filler does not need to be mixed in the coating material containing a non-linear resistance material. A filler such as alumina or silica as an insulating material is used to maintain strength, and does not cause any influence for suppressing the movement of the metallic foreign matter 4. Therefore, the coating film 3 can contain, for example, only resin that is a coating material component and a non-linear resistance material.

### Industrial Applicability

As described above, the present invention is useful as a gas-insulated switchgear that can suppress movement of metallic foreign matter that is present in a tank.

### Reference Signs List

1 tank, 1a flange, 2 central conductor, 3, 100, 101 coating, 4 metallic foreign matter.

## Claims

1. A gas-insulated switchgear comprising:
a metal tank (1) that is grounded and has insulating gas filled therein;
a conductor (2) that is extended in the tank and to which an alternating voltage is applied;
an insulating first coating film (101) that is formed on an inner surface of the tank; and
a second coating film (3) that is formed on the first coating film, the second coating film containing an insulating material and a non-linear resistance material,
**characterized in that** the non-linear resistance material is silicon carbide,
and the filling rate of the silicon carbide in the second coating film is in a range from 30% to 80% in a volume fraction.

## Patentansprüche

1. Gasisoliertes Schaltventil, umfassend:
einen Metalltank (1), der geerdet ist und darin gefülltes Isoliergas fasst;
einen Leiter (2), der sich in dem Tank erstreckt und an den eine Wechselspannung angelegt ist;
einen isolierenden ersten Beschichtungsfilm (101), der auf eine Innenfläche des Tanks aufgetragen ist; und
einen zweiten Beschichtungsfilm (3), der auf den ersten Beschichtungsfilm aufgetragen ist, wobei der zweite Beschichtungsfilm ein isolierendes Material und ein nichtlineares Widerstandsmaterial enthält, **dadurch gekennzeichnet, dass**
das nichtlineare Widerstandsmaterial Siliziumkarbid enthält, und
die Füllrate des Siliziumkarbids in dem zweiten Beschichtungsfilm in einem Bereich von 30% bis 80% im Volumenanteil liegt.

## Revendications

1. Appareillage de commutation isolé par un gaz comprenant :
un réservoir en métal (1) qui est mis à la terre et qui comporte un gaz isolant rempli à l'intérieur ;
un conducteur (2) qui s'étend dans le réservoir et auquel une tension alternative est appliquée ;
un premier film de revêtement isolant (101) qui est formé sur une surface intérieure du réservoir ; et
un second film de revêtement (3) qui est formé sur le premier film de revêtement, le second film de revêtement contenant un matériau isolant et un matériau à résistance non linéaire,
**caractérisé en ce que**
le matériau à résistance non linéaire est du carbure de silicium, et le taux de remplissage du carbure de silicium dans le second film de revêtement est dans une plage de 30 % à 80 % exprimée en fraction volumétrique.
